# EUROPEAN PATENT SPECIFICATION

(11) **EP 2 152 056 B1**
(45) Date of publication and mention of the grant of the patent: **22.03.2017**
(21) Application number: 08779362.6
(22) Date of filing: 09.06.2008
(51) Int. Cl.: A01C 15/04, A01C 7/08, A01C 7/20

(54) **DISTRIBUTOR HEAD FOR AN AGRICULTURAL MACHINE**
VERTEILERKOPF FÜR EINE LANDWIRTSCHAFTLICHE MASCHINE
TÊTE DISTRIBUTRICE POUR MACHINE AGRICOLE

(30) Priority: 06.06.2007 SE 0701412
(43) Date of publication of application: 17.02.2010
(73) Proprietor: Väderstad Holding AB, 590 21 Väderstad (SE)
(72) Inventor: STARK, Crister, S-590 21 Väderstad (SE)
(74) Representative: Lettström, Richard Wilhelm
(86) International application number: PCT/SE2008/050680
(87) International publication number: WO 2008/150239

(56) References cited:
- EP-A1- 0 252 348
- EP-A1- 0 687 406
- EP-A2- 0 309 608
- EP-A2- 1 183 929
- WO-A1-2005/004579
- DE-A1- 19 961 703
- DE-A1-102005 008 290
- DE-A1-102005 038 216
- DE-C1- 3 805 148
- DE-C1- 4 411 240

## Description

The invention refers to a distributor head for an agricultural machine according to the pre-characterising portion of Claim 1.

### TECHNICAL AREA

Pneumatic seed drills, i.e. seed drills where the seed is transported to seed coulters with the help of the airflow in the tubes, can be traced back to ca. 1920 in their first forms. Since the 1970s pneumatic seed drills are common in agriculture and over time their working width and ability to bear loads have been developed into very large machines. The seed drills have at least one container for seed. Many seed drills have several containers. One can be for seed, one can be for fertiliser and a third can be for grass seed while an additional one can be for crop protection chemicals or other type of fertiliser. The farmer's demands on a seed drill vary strongly with region, type of agriculture, etc. A 'metering house' usually meters out the relevant amount of seed (or other goods) and feeds it to an air hose, whereupon the air hose transports the seed to one or more distributor heads. In the distributor head the larger flow of air and 'seed' is divided into smaller flows that are directly or indirectly transported down to the seed coulters of the machine to be incorporated into the soil as the machine drives over the soil. In another case, where fertiliser or perhaps a crop protection chemical is being spread, the granulate is blown over the soil surface to obtain best effect.

Distributor heads have been found on agricultural machines, especially seed drills, during as long a time as pneumatic metering of seed or fertiliser has been in use. A distributor head can be used at metering of different sorts, as at metering of seed, fertiliser, crop protection chemical or other granular material.

In its simplest form the distributor head consists solely of a distribution space, a connection for incoming air and seed and a number of exits for connecting with seed coulters or cultivator tines. As sowing technology has developed over time the demands on functions have become more numerous. One demand is that it should be possible to close off certain exits so that the seed drill can lay so-called tramlines, i.e. the farmer wants to be able to lay tramlines in the field with a particular distribution of for example 24 m, which multiple can match the width of a fertiliser spreader and/or a weed sprayer.
By laying tramlines the subsequent work operations can be carried out with good precision and the smallest possible environmental load. There are a range of specified and unspecified demands and desires that current technology has not been able to meet.

A distributor head according to the pre-characterising portion of claim 1 is disclosed in DE-A-1020050321611. Distributor heads with closing apparatus for predetermined exits are also shown and described in EP-A-0674830, EP-A-0687406 and DE-A-102005008290. In EP-A-0309608 it is mentioned that remote control of individual exit holes can be possible. At simultaneous closing of several holes the remote control for this construction can appear to be complicated.

For the farmer it is important to be able to close off a part of the working width of the machine so as not to double sow (overlap) when the field is not perfectly rectangular. With double sowing or double fertilisation the crop is poorer, too dense stands develop badly and are often subject to fungal attack. Other disadvantages of double fertilisation are that leaching increases and that the crop becomes so lush that it falls over in rainy conditions. Another demand can be that certain rows have to be closed off when certain crops are sown with different row spacing. Wheat is suitably sown with a row spacing of 12.5 cm and maize should be sown with 75 cm row spacing meaning that 5 rows should be closed between each seed row in comparison with wheat.

Another demand is for a machine to easily be able to have different properties if the farmer's cropping conditions change, cropping conditions can change in that a crop new to the farmer becomes relevant. Another change that can be relevant is that the farmer wants to have a different tramline multiple. If the desired multiple is not divisible by the seed drill width the seed drill can require two tramline systems that are controlled by the electronics. For example a farmer with an 8 m wide seed drill wants to have tramlines at 28 m. This is not possible without having more than one tramline system. The machine can then lay any multiple at all if the machine has an appropriate control system. This can be extra important for a machine operator who does contract work and comes to new clients with different demands on tramlining intervals. The machine can be orientated in different ways and through the now common GPS technology the above function can relatively easily be achieved.

### AIMS OF THE INVENTION

The aim of the invention is to produce a distributor head at an agricultural machine, which distributor head minimises the above mentioned problems and which allows handling of each seed row separately or several in a group.

### SUMMARY OF THE INVENTION

The aim is achieved through a distributor head at an agricultural machine according to the characterising portion of Claim 1.

The sub-claims refer to advantageous embodiments of the invention.

Through a similar distributor head it is possible to lay any seed row multiple at all provided that the machine has an appropriate control system.

### DRAWING SUMMARY

The invention is described more closely below with reference to the attached drawings, which show preferred examples of embodiments.
Figure 1 shows a seed drill with a distributor head according to the invention.
Figure 2 shows a partial, partly sectioned perspective view of a distributor head according to the invention with a closing apparatus.
Figure 3 shows a perspective view of the closing apparatus in Fig. 2.
Figure 4 shows a planar view of a first embodiment of a control device for use with the distributor head according to the invention.
Figure 5 shows a planar view of a second embodiment of a control device for use with the distributor head according to the invention.

### DESCRIPTION OF PREFERRED EMBODIMENTS

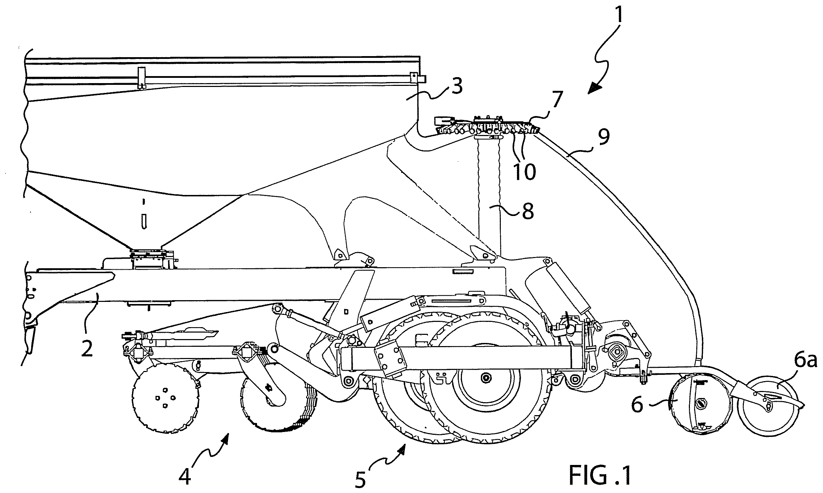

In Fig. 1 is shown an agricultural machine, especially a seed drill 1, which comprises a frame 2, an on the frame arranged container 3 for seed or other granular material, toolbar 4, transport wheels 5, seed coulters 6 with support wheels 6a, a distributor head 7, a riser pipe 8 for pneumatic transport of the seed from the container 3 to the distributor head 7 via a not shown dosing device and flexible seed hoses 9 for transport of the seed from the distributor head 7 to the seed coulters 6. The seed hoses 9 are connected to exit holes 10 arranged along the circumference of the distributor head 7. In Fig. 1 for the sake of clarity only one seed hose 9 has been shown, but seed hoses 9 are arranged at a plurality, most often all, of the exits of the distributor head 7. The distributor head 7 according to the invention has at selected exit holes 10 closing apparatus 11, which are adapted to close predetermined exits so as in this way to arrange tramlines in the sown field, i.e. certain selected coulters with a predetermined distribution throughout the field do not sow seed and therefore give rise to tramlines when the seed germinates.

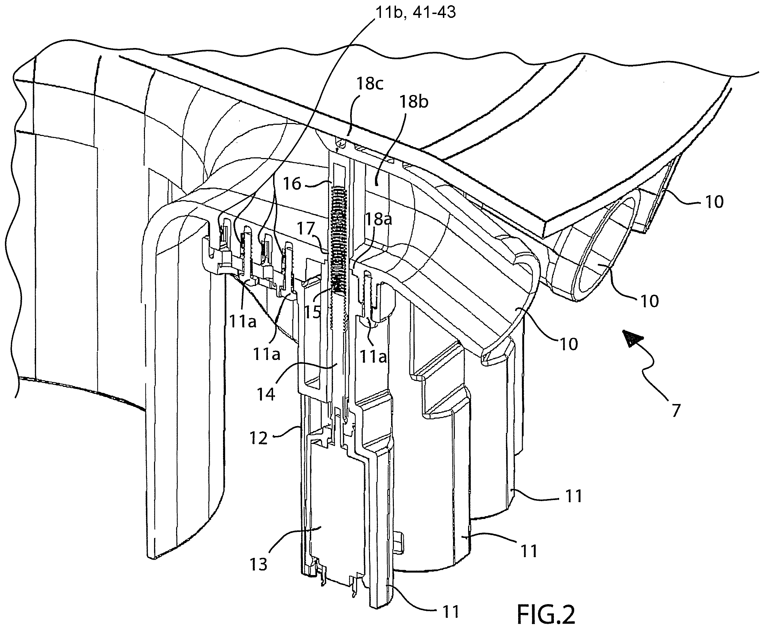

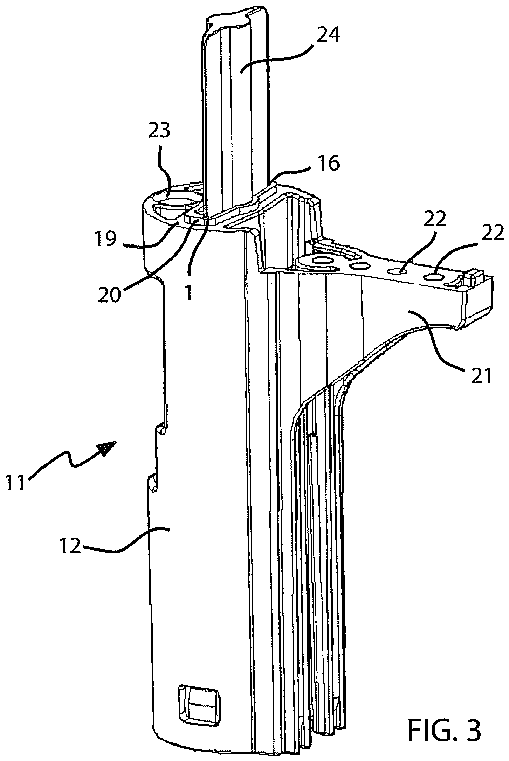

In Figs. 2 and 3 the closing apparatus 11 is shown mounted at the distributor head 7 with the exit holes 10 and also separately disassembled. Each closing apparatus 11 comprises a house 12 and a reversible motor 13 mounted in the house and adapted at a particular control signal to bring a bolt-threaded rod 14 to rotate in either direction in an elongated nut-threaded part 15, which is fixedly mounted inside a closing flap 16 and which receives the bolt-threaded rod 14. At activation of the motor 13 the closing flap 16 is moved upwards or downwards so as to either close or open a particular exit 10. The closing flap 16 is inserted through a slit 17 in the lower wall 18a of the exit hole 10 and runs on either side of not shown slits in the side walls 18b of the exit hole 10 so as to come to abut against the upper wall 18c of the exit hole 10 and close the exit hole 10. The flaps 16, which are intended to be activated by means of a motor 13, are preferably perforated so as to allow air through at closing of a predetermined number of flaps, so that in general the same airstream is therein maintained through the distributor head 7.

The aperture 17 of the closing apparatus 11 is made through the upper wall 19 and has extending along the periphery of the flap aperture 17 a flange 20 (see Fig. 3), which is adapted to be inserted into and fixed in the wall 18a of the exit hole 11 (see Fig. 2).

The closing apparatus 11 has a mounting flange 21 with four holes 22 on one side of the flap 16 and on its opposite side one hole 23. Holes 22 and 23 are intended for screwing fixedly on the outside of wall 18a of the exit hole 10 by means of screws 11a (see Fig. 2), and are also intended for screws 11a preferably of an electricity conducting material for coming into current-conducting contact with strips 11b embedded in the closing apparatus 11 with the aim of activating the motor 13 in the closing apparatus 11. A longitudinal protrusion 24 on the flap 16 is arranged for the elongated nut-screwed part 15.

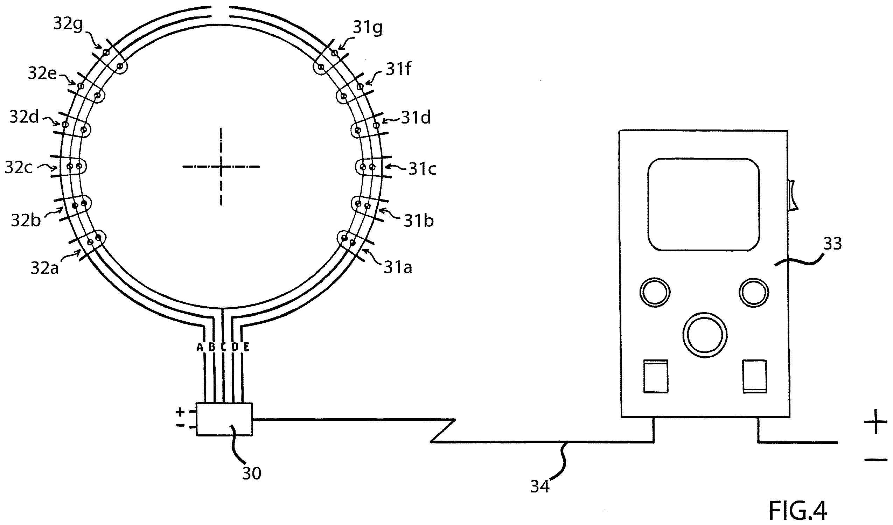

Fig. 4 shows an example of a control of the closing apparatus 11 at a circular distributor head (see EP-A-0674830) where the exits are arranged along a conceptual circle. From a control box 30 a plurality of electricity conducting leads A-E are inserted along at least the extension of said predetermined number of exit holes and are drawn to connections 31a-g and 32a - g to the reversible motor 13 of the closing apparatus 11, which activates the flaps 16 by means of a buss-system so that a predetermined number of exit holes 10 can be opened or closed through settings on a manipulation panel 33 in the tractor cab. The manipulation panel 33 is connected to the control box 30 of the buss-system via a control lead 34.

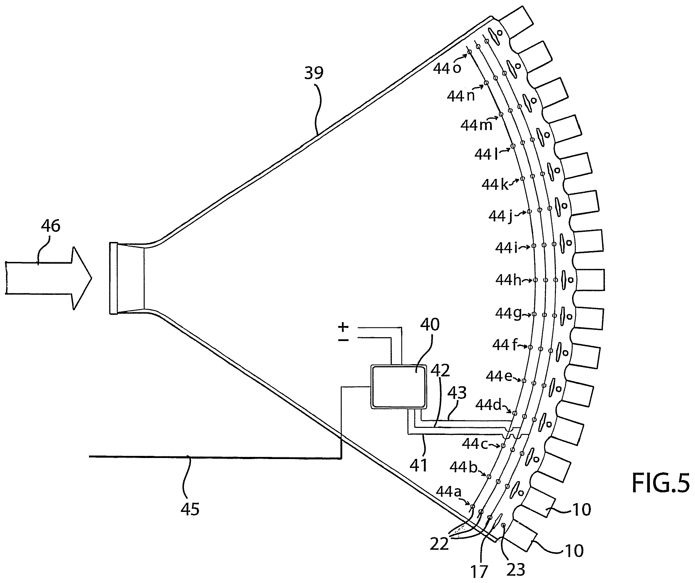

Fig. 5 shows another example of a control of closing apparatus 11 at a segment-shaped distributor head 39 (see US-A-4,717,289) where the exit holes are arranged along a conceptual segment of a circle. From a control box 40 a plurality of leads 41-43 are drawn to connections 44a-o to the reversible motor 13 of the closing apparatus 11, which activates the flaps 16 by means of a buss-system so that a predetermined number of exit holes 10 can be opened or closed through settings on a manipulation panel in the tractor cab. The manipulation panel is connected to the control box 40 of the buss-system via a control lead 45. An arrow 46 marks the entry direction of the pneumatically metered seed or other granular material. Here the fastening holes 22 and 23 and the aperture 17 for the flap 16 of the closing apparatus 11 are also revealed.

The invention can be varied in a number of different ways within the framework of the attached claims, although the embodiments described above are to be preferred.

The distributor head according to the invention is constructed simply with maximal flexibility. To each exit hole a closing entity or flap entity can be connected. The closing entities can all be similar. One embodiment has the simplest conceivable design, where an electric motor drives a flap up and down. In another embodiment each flap or group of flaps communicates with a control device which selectively activates one or several of the closing apparatus 11. This can also take place by means of a buss-system.

The electrical connection can be comprised of at least two conductor strips that lie at predetermined concentric positions according to Fig. 4, the flap entities are connected in their predetermined positions and are suitably mounted with fastening elements that are connected directly into the electrical conductors.

Depending on the desired function and flexibility the distributor head is equipped with a suitable number of electrical conductors. The flap entities can then be mounted in desired numbers and connected in a way that provides the desired function. The house of the closing apparatus 11 can be integrated with the distributor head and for example manufactured in one piece therewith. In the house the motor, flap etc. are then mounted.

The electrical conductors are suitably orientated concentrically, they can be continuous or sectioned (segmented). Through for example splitting a ring in two halves and controlling the current to one or other half a half-machine shut-off is easily obtained. If the rings are made segmented a section-wise shut-off of the exits is obtained. If more electrical conductors are laid the flap entities can be connected alternately so that alternate or every third or each conceivable combination can be closed or opened. The distributor head is most easily made round since then a precise distribution of seed can be achieved. However flat or segment-shaped distributor heads may need to be used for various machine technical reasons. Specific measures must then be taken in order for the distribution to be good. With segment-shaped distributor heads the same flap system can be used but is then not all-encompassing.

The flap entities 16 are suitably made in one design. Each flap entity contains a flap 16 and a power apparatus, for example a reversible electric motor 13. The flap entity has suitably two electrical connections (+ /-) by giving a flap entity several connections one entity can be connected to that or those electrical conductors that provide the function desired. The function can be obtained through alternately running current through the strips that control the desired flap entities. Through changing polarity the flaps are driven to open or closed position. It is suggested that all the acting connections in a distributor head be equipped with connection for a flap entity. The hole through the bottom wall 18a of the distributor head is suitably not made fully penetrating. A thin layer of material is left and is punched out with a simple tool where the flap entities are to be mounted.

Control of the system occurs suitably through an adjustment of the machine's control system so that the conductor strips are made live and the polarity changed so that the desired function is obtained.

Each closing apparatus 11 with flap 16 is controlled individually. The control, which is preferably achieved by means of a buss-system, is managed individually so that every flap is closed and opened as desired. A function can then be obtained such that a free pattern can be created by the machine during driving over a field. One can for example write a message or draw a graphical picture viewed from above on the field. With GPS technology the machine can determine position with very great accuracy, so a message or picture can be generated to a height of several machine widths. Depending on how the entities are activated, the picture or message can be generated along or across the direction of travel.

The system can be provided with efficient and continuous monitoring through the current being measurable for each group of flaps, and deviations from an expected current consumption or its variation over a cycle of movement can form the basis for a warning.

## Claims

1. Distributor head for an agricultural machine, such as a seed drill, comprising a chamber, to which is connected a pipe (8) for supply of seed or other granular material, wherein the chamber has a plurality of exit holes (10), which are connected with seed coulters (6) or other seed spreading aggregate, in addition to which at a predetermined number of exit holes closing apparatuses (11) are arranged intended for opening and closing said predetermined number of exit holes, whereby electricity conducting leads (A - E; 41, 42, 43) are inserted along at least the extension of said predetermined number of exit holes (10) so as by means of a control entity (30, 40) to selectively activate one or more of said closing apparatuses, each one of said closing apparatus (11) being comprised of a house (12), in which a power apparatus (13) is intended to activate a forwards and backwards displaceable flap (16), which is adapted to open and close said exit holes (10) **characterised in that** said house has holes (22) for fastening of the closing apparatus (11) on the distributor head and that at least one of said holes is intended for fastening of said leads (A-E; 41, 42, 43) by means of a conducting fastening element (11a) so as to achieve an electrical connection between lead and motor (13) in the closing apparatus (11).

2. Distributor head according to Claim 1, **characterised in that** said closing apparatuses (11) are adapted to be activated through a buss-system.

3. Distributor head according to Claim 1 or 2, **characterised in that** said closing apparatuses (11) are activated individually.

4. Distributor head according to Claim 1 or 2, **characterised in that** said closing apparatuses (11) are activated group-wise.

5. Distributor head according to any one of Claims 1 - 4, **characterised in that** said power apparatus is a reversible, electric motor (13).

6. Distributor head according to 1 - 5, **characterised in that** said flap (16) is perforated.

7. Distributor head according to any one of Claims 1 - 6, **characterised in that** electricity conducting strips (11b), preferably of copper, are incorporated in said house (12).

8. Distributor head according to Claim 7, **characterised in that** each selectively chosen flap (16) is adapted to be activated through a signal or current pulse from the control entity (30, 40) via both the resp. lead (A-E; 41, 42, 43) and the resp. strip (11b) to the motor (13) belonging to the flap.

## Patentansprüche

1. Verteilerkopf für eine landwirtschaftliche Maschine, wie etwa eine Drillmaschine, umfassend eine Kammer, mit der ein Rohr (8) verbunden ist zur Zufuhr von Saatgut oder anderem körnigen Material, wobei die Kammer eine Vielzahl von Ausgangslöchern (10) aufweist, die mit Säschienen (6) oder anderem Samenverteilaggregat verbunden sind, zu denen zusätzlich an einer vorbestimmten Anzahl von Ausgangslöchern Verschlussvorrichtungen (11) angeordnet sind, um die vorbestimmte Anzahl von Ausgangslöchern zu öffnen oder zu verschließen, wobei Strom leitende Leitungen (A-E, 41, 42, 43) entlang wenigstens der Erstreckungsrichtung der vorbestimmten Anzahl von Ausgangslöchern (10) eingesetzt sind, um durch eine Steuerungseinheit (30, 40) wahlweise eine oder mehrere der Verschlussvorrichtungen zu aktivieren, wobei jede der Verschlussvorrichtungen (11) von einem Gehäuse (12) umfasst ist, in dem eine Stromvorrichtung (13) eingerichtet ist, um eine nach vorne und nach hinten verschiebbare Klappe (16) zu aktivieren, die angepasst ist die Ausgangslöcher (10) zu öffnen und zu verschließen, **dadurch gekennzeichnet, dass**
das Gehäuse Löcher (22) zum Befestigen der Verschlussvorrichtung (11) an dem Verteilerkopf aufweist und dass wenigstens eines dieser Löcher eingerichtet ist, um die Leitungen (A-E, 41, 42, 43) durch ein leitfähiges Befestigungselement (11a) zu befestigen, um so eine elektrische Verbindung zwischen Leitung und Motor (13) in der Verschlussvorrichtung (11) zu erreichen.

2. Verteilerkopf gemäß Anspruch 1, **dadurch gekennzeichnet, dass** die Verschlussvorrichtungen (11) angepasst sind, um durch ein Bus-System aktiviert zu werden.

3. Verteilerkopf gemäß Anspruch 1 oder 2, **dadurch gekennzeichnet, dass** die Verschlussvorrichtungen (11) individuell aktiviert werden.

4. Verteilerkopf gemäß Anspruch 1 oder 2, **dadurch gekennzeichnet, dass** die Verschlussvorrichtungen (11) gruppenweise aktiviert werden.

5. Verteilerkopf gemäß irgendeinem der Ansprüche 1-4, **dadurch gekennzeichnet, dass** die Stromvorrichtung ein umsteuerbarer Elektromotor (13) ist.

6. Verteilerkopf gemäß irgendeinem der Ansprüche 1-5, **dadurch gekennzeichnet, dass** die Klappe (16) perforiert ist.

7. Verteilerkopf gemäß irgendeinem der Ansprüche 1-6, **dadurch gekennzeichnet, dass** elektrisch leitfähige Streifen (11b), bevorzugt aus Kupfer, in dem Gehäuse (12) enthalten sind.

8. Verteilerkopf gemäß Anspruch 7, **dadurch gekennzeichnet, dass** jede wahlweise ausgewählte Klappe (16) angepasst ist, um durch ein Signal oder Stromimpuls von der Steuerungseinheit (30, 40) aktiviert zu werden, sowohl über die jeweilige Leitung (A- E, 41, 42, 43) als auch den jeweiligen Streifen (11b) des Motos (13), der zu der Klappe gehört.

## Revendications

1. Tête distributrice pour une machine agricole, telle qu'un semoir, comprenant une chambre, à laquelle est raccordé un tuyau (8) pour l'alimentation en semences ou autre matériau granulaire, la chambre ayant une pluralité de trous de sortie (10), qui sont reliés à des socs de semoir (6) ou à un autre agrégat d'ensemencement, en plus desquels, au niveau d'un nombre prédéterminé de trous de sortie, sont agencés des appareils de fermeture (11), destinés à ouvrir et à fermer ledit nombre prédéterminé de trous de sortie, des conducteurs d'électricité (A - E ; 41, 42, 43) étant insérés le long d'au moins l'extension dudit nombre prédéterminé de trous de sortie (10) de manière, au moyen d'une entité de commande (30, 40), à activer de façon sélective un ou plusieurs desdits appareils de fermeture, chacun desdits appareils de fermeture (11) étant constitué par un logement (12), dans lequel un appareil d'actionnement (13) est destiné à activer un volet (16) déplaçable vers l'avant et vers l'arrière, qui est adapté pour ouvrir et fermer lesdits trous de sortie (10), **caractérisée en ce que** ledit logement présente des trous (22) pour la fixation de l'appareil de fermeture (11) sur la tête de distribution et **en ce qu'**au moins l'un desdits trous est prévu pour la fixation desdits conducteurs (A - E ; 41, 42, 43) au moyen d'un élément de fixation conducteur (11a) pour obtenir une connexion électrique entre un conducteur et un moteur (13) dans l'appareil de fermeture (11).

2. Tête distributrice selon la revendication 1, **caractérisée en ce que** lesdits appareils de fermeture (11) sont adaptés pour être activés par un système de bus.

3. Tête distributrice selon la revendication 1 ou la revendication 2, **caractérisée en ce que** lesdits appareils de fermeture (11) sont actionnés individuellement.

4. Tête distributrice selon la revendication 1 ou la revendication 2, **caractérisée en ce que** lesdits appareils de fermeture (11) sont activés par groupe.

5. Tête distributrice selon l'une quelconque des revendications 1 à 4, **caractérisée en ce que** ledit appareil d'actionnement est un moteur électrique réversible (13).

6. Tête distributrice selon l'une quelconque des revendications 1 à 5, **caractérisée en ce que** ledit volet (16) est perforé.

7. Tête distributrice selon l'une quelconque des revendications 1 à 6, **caractérisée en ce que** des bandes (11b) conductrices d'électricité, de préférence en cuivre, sont incorporées dans ledit logement (12).

8. Tête distributrice selon la revendication 7, **caractérisée en ce que** chaque volet (16) choisi de façon sélective est apte à être activé par une impulsion de signal ou de courant allant de l'entité de commande (30, 40) via à la fois le conducteur respectif (A-E ; 41, 42, 43) et la bande respective (11b), vers le moteur (13) appartenant au volet.
